# EUROPÄISCHE PATENTSCHRIFT

(11) **EP 2 748 044 B1**
(45) Veröffentlichungstag und Bekanntmachung des Hinweises auf die Patenterteilung: **10.01.2018**
(21) Anmeldenummer: 11784428.2
(22) Anmeldetag: 15.11.2011
(51) Int. Cl.: B60W 30/18

(54) **VERFAHREN ZUM BREMSEN EINES KRAFTFAHRZEUGS**
METHOD FOR BRAKING A MOTOR VEHICLE
PROCÉDÉ DE FREINAGE D'UN VÉHICULE AUTOMOBILE

(30) Priorität: 25.08.2011 DE 102011111594
(43) Veröffentlichungstag der Anmeldung: 02.07.2014
(73) Patentinhaber: Audi AG, 85045 Ingolstadt (DE)
(72) Erfinder: KLEICKMANN, Bodo, 85049 Ingolstadt (DE); MEIER, Thomas-Willibald, 91161 Hilpoltstein (DE)
(74) Vertreter: Engelhardt, Harald
(86) Internationale Anmeldenummer: PCT/EP2011/005740
(87) Internationale Veröffentlichungsnummer: WO 2013/026459

(56) Entgegenhaltungen:
- EP-A1- 2 314 486
- EP-A2- 1 876 082
- WO-A1-2004/101308
- DE-A1- 4 446 219
- DE-A1- 4 446 485
- DE-A1-102008 023 305

## Beschreibung

Die vorliegende Erfindung betrifft ein Verfahren zum Bremsen eines Kraftfahrzeugs, das durch ein Antriebsmoment zumindest einer elektrischen Maschine angetrieben wird. Überdies betrifft die vorliegende Erfindung ein Kraftfahrzeug.

Bei Elektro- oder Hybridfahrzeugen, welche mit zumindest einer elektrischen Maschine angetrieben werden, ergeben sich im Hinblick auf das Bremssystem der Kraftfahrzeuge neue Anforderungen. Bei diesen Kraftfahrzeugen kann die elektrische Maschine zum Bremsen des Kraftfahrzeugs als Generator betrieben werden. Durch diese sogenannte Rekuperation besteht die Möglichkeit, bei einem Bremsvorgang einen Teil der Bewegungsenergie des Kraftfahrzeugs in elektrische Energie zurückzuführen.

Da die Bremsmomente der elektrischen Maschinen in der Regel nicht ausreichen, um eine Vollbremsung des Kraftfahrzeugs zu ermöglichen, werden zusätzlich Reibbremsen verbaut, mit denen die erforderlichen Bremsmomente aufgebracht werden können. Vor dem Hintergrund der Energieeffizienz ist es jedoch sinnvoll, einen möglichst großen Teil der Bewegungsenergie des Kraftfahrzeugs mittels der elektrischen Maschine in elektrische Energie und einen möglichst kleinen Teil mittels der Reibbremsen in Wärme zu wandeln.

Wenn der Fahrer das Bremspedal der Reibbremse betätigt, muss er mit dem Pedal zunächst einen, Leerweg überwinden, in dem von der Reibbremse keine Bremskraft erzeugt wird. Um einen möglichst großen Anteil der Bewegungsenergie durch den Elektromotor bzw. die elektrische Maschine zurückzugewinnen, muss bereits im Leerweg des Bremspedals rekuperiert werden. Ist die Batterie oder ein anderer Energiespeicher des Kraftfahrzeugs allerdings vollständig aufgeladen, kann mit der elektrischen Maschine im Generatorbetrieb keine Energie in die Batterie zurückgespeist werden. Folglich kann auch keine Bremswirkung durch die elektrische Maschine erzeugt werden und die auf das Kraftfahrzeug wirkende Bremskraft ändert sich. Dieser Wechsel im Bremsverhalten ist für den Fahrer überraschend und kann ihn versunsichern.

Um diesen Einfluss auf das Bremsverhalten zu begrenzen, ist bei Elektro- oder Hybridfahrzeugen mit einem konventionellen Bremssystem das Bremsmoment der elektrischen Maschine begrenzt. Dies hat allerdings zur Folge, dass das Potenzial der Rekuperation nicht vollständig genutzt werden kann. Weiterhin werden so genannte blending-fähige Bremssysteme verwendet, die unabhängig von der Bremspedalbetätigung des Fahrers die Reibbremse ansteuern, um ein möglichst gleichmäßiges Bremsverhalten zu ermöglichen. Diese Bremssysteme sind allerdings teuer. Überdies werden Lösungsansätze verwendet, bei denen bei einer vollständig aufgeladenen Batterie die Energie der elektrischen Maschine über einen ohmschen Zusatzwiderstand in Wärme umgewandelt wird. Nachteilig bei diesem Ansatz sind jedoch der zusätzlich benötigte Bauraum und die zusätzlichen Kosten, die durch den Einbau des Zusatzwiderstands entstehen.

Die DE 103 36743 A1 beschreibt ein System, das für eine koordinierte Drehmomentsteuerung eines Kraftfahrzeugs, insbesondere eines Elektrofahrzeugs oder Hybridfahrzeugs, eine Steuereinheit für einen Antriebsstrang enthält. Hierbei wird gesteuert, welches Drehmoment von den einzelnen Drehmomentquellen bereitgestellt wird, bzw. wie das Drehmoment beispielsweise durch Schwungräder oder durch Gegenstrombremsen reduziert wird. Hierbei werden auch die Betriebsparameter der elektrischen Maschinen oder der Ladezustand der Batterie überwacht. Des Weiteren können auch in Abhängigkeit von der Fahrsituation und dem Fahrstil des Fahrers das Pedalgefühl und die Gangschaltung des Kraftfahrzeugs eingestellt werden.

Die DE 44 46 219 A1 beschreibt ein Kraftfahrzeug mit mehreren Elektromotoren für den Antrieb der Räder. Zum Bremsen des Kraftfahrzeugs können die Elektromotoren im generatorischen Bremsbetrieb oder im gegenmotorischen Bremsbetreib arbeiten. Hierbei ist es ebenso vorgesehen, dass die Elektromotoren an unterschiedlichen Antriebsachsen auch in verschiedenen Betriebsarten betrieben werden.

Des Weiteren beschreibt die WO 2004/101308 A1 ein Verfahren für die Regelung eines regenerativen Bremssystems mit einer Anzahl von Reibbremsen und einer elektrisch-regenerativen Bremse für ein Kraftfahrzeug. Hierbei wird der Bremsvorgang in mehrere Phasen unterteilt. In einer ersten Phase, während der das Bremspedal kräftig niedergetreten wird, wird zunächst bei noch nicht voll betätigtem Bremspedal das gesamte Bremsmoment vom Generator aufgebracht. Am Übergang zu einer zweiten Phase wird der Bereich verlassen, in dem der Generator das Bremsmoment vollständig leisten kann, so dass in der zweiten Phase der Bremsmomentanteil der Reibbremse bis zum Endwert ansteigt.

Die Aufgabe der vorliegenden Erfindung ist es, ein besonders effektives Verfahren zum Bremsen eines Kraftfahrzeugs bereitzustellen, das mit zumindest einer elektrischen Maschine angetrieben wird.

Diese Aufgabe wird erfindungsgemäß gelöst durch ein Verfahren gemäß Patentanspruch 1. Demnach wird in einem ersten Betriebsmodus die zumindest eine elektrische Maschine als Generator zum Erzeugen eines Generatorbremsmoments betrieben und in einem zweiten Betriebsmodus wird die zumindest eine elektrische Maschine so mit elektrischer Energie aus dem Energiespeicher versorgt, dass von der zumindest einen elektrischen Maschine ein dem Antriebsmoment entgegengesetzt gerichtetes Bremsmoment erzeugt wird. Somit kann das Bremsverhalten der elektrischen Maschine besonders flexibel an den jeweiligen Betriebszustand des Kraftfahrzeugs angepasst werden.

Ein Kraftfahrzeug, insbesondere ein Elektro- oder ein Hybridfahrzeug, kann einen oder mehrere elektrische Antriebsmotoren umfassen. Die Elektromotoren bzw. elektrischen Maschinen werden erfindungsgemäß neben dem Antreiben des Kraftfahrzeugs auch zum Bremsen des Kraftfahrzeugs verwendet. Zu diesem Zweck kann die elektrische Maschine als Generator betrieben werden. In diesem ersten Betriebsmodus, der auch als Nutzbremsen oder Rekuperation bezeichnet wird, wird von der elektrischen Maschine ein entsprechendes Generatorbremsmoment erzeugt, das eine auf das Kraftfahrzeug wirkende Bremskraft bewirkt. In diesem ersten Betriebsmodus wird von der elektrischen Maschine elektrische Energie erzeugt, die an einen Energiespeicher des Kraftfahrzeugs übertragen werden kann. Daneben ist es in einem zweiten Betriebsmodus vorgesehen, zum Bremsen des Kraftfahrzeugs die elektrische Maschine so mit elektrischer Energie aus dem Energiespeicher zu versorgen, dass von der elektrischen Maschine ein dem Antriebsmoment entgegengesetzt gerichtetes Bremsmoment erzeugt wird. Folglich kann beim Bremsen des Kraftfahrzeugs mit der elektrischen Maschine entweder elektrische Energie erzeugt werden oder verbraucht werden.

Ferner wird eine Bremskraft, die von der zumindest einen elektrischen Maschine erzeugt wird, in Abhängigkeit von einer Stellung eines Bremspedals einer Reibbremseinrichtung des Kraftfahrzeugs eingestellt. Da das von der elektrischen Maschine bereitgestellte Bremsmoment üblicherweise nicht ausreicht, um eine Vollbremsung des Kraftfahrzeugs zu erzeugen, werden zusätzliche Reibbremsen in das Kraftfahrzeug eingebaut. Die elektrische Maschine wird bevorzugt so betrieben, dass die von ihr erzeugte Bremskraft in Summe mit der Bremskraft der Reibbremse über den gesamten Pedalweg eine im Wesentlichen gleichmäßig zunehmende Bremskraft erzeugt, so dass für den Fahrer keine Einflüsse im Bremsverhalten wahrnehmbar sind.

Zudem wird die Bremskraft in einem ersten Bereich eines Pedalwegs des Bremspedals ausschließlich von der zumindest einen elektrischen Maschine je nach Ladezustand des elektrischen Energiespeichers in dem ersten Betriebsmodus oder dem zweiten Betriebsmodus erzeugt. Dieser erste Bereich des Pedalwegs entspricht üblicherweise dem Leerweg des Bremspedals. Hierbei wird die Bremskraft ausschließlich von der elektrischen Maschine bereitgestellt. Zu diesem Zweck kann die elektrische Maschine sowohl in dem ersten als auch in dem zweiten Betriebsmodus betrieben werden. Bevorzugt wird ab dem Zeitpunkt, ab dem der Fahrer das Bremspedal betätigt, im Leerweg des Bremspedals von der elektrischen Maschine eine Bremskraft bereitgestellt, welche in Abhängigkeit von dem Pedalweg im Wesentlichen linear zunimmt. Daher kann bereits im Leerweg des Bremspedals eine Bremskraft von der elektrischen Maschine erzeugt werden und somit das Kraftfahrzeug abgebremst werden. Ferner kann - wenn die elektrische Maschine als Generator betrieben wird - in diesem ersten Bereich besonders effektiv elektrische Energie erzeugt werden.

Des Weiteren wird die Bremskraft in einem zweiten Bereich des Pedalwegs des Bremspedals von der zumindest einen elektrischen Maschine und der Reibbremseinrichtung erzeugt. Nachdem der Leerweg des Bremspedals überwunden ist, wird sowohl von der Reibbremseinrichtung als auch von der elektrischen Maschine eine Bremskraft erzeugt. Somit kann auch nach dem Einsetzen der Bremswirkung der Reibbremse durch die elektrische Maschine im Generatorbetrieb elektrische Energie rekuperiert werden.

Ferner ist die von der zumindest einen elektrischen Maschine erzeugte Bremskraft in dem zweiten Bereich des Pedalwegs im Wesentlichen konstant. Nach dem Überwinden des Leerwegs des Bremspedals wird von der Reibbremse des Kraftfahrzeugs eine im Wesentlichen linear ansteigende Bremskraft erzeugt. Wird in diesem Bereich die von der elektrischen Maschine erzeugte Bremskraft im Wesentlichen auf einen konstanten Wert eingestellt, ergibt sich aus der Summe der Bremskräfte der Reibbremse und der elektrischen Maschine über den gesamten Pedalweg ein im Wesentlichen linearer Verlauf. Somit ergibt sich für den Fahrer ein gewohntes Bremsverhalten des Kraftfahrzeugs. Der Fahrer wird somit nicht verunsichert. Daher kann die Sicherheit der Fahrzeuginsassen und der übrigen Verkehrsteilnehmer garantiert werden.

Der zuvor beschriebene Betrieb der elektrischen Maschine und/oder der Reibbremse in Abhängigkeit von dem Pedalweg der Reibbremse kann in gleicher Weise in Abhängigkeit von einer auf das Bremspedal der Reibbremse ausgeübten Pedalkraft erfolgen.

Bevorzugt wird der Betriebsmodus in Abhängigkeit von einem Ladezustand des Energiespeichers eingestellt. Ein solcher Energiespeicher kann beispielsweise eine Batterie bzw. ein Akkumulator oder ein Kondensator sein. Ist der Energiespeicher nicht ausreichend aufgeladen, wird die elektrische Maschine als Generator betrieben. Somit kann der Energiespeicher aufgeladen werden. Falls der Energiespeicher vollständig aufgeladen ist, wird die elektrische Maschine zum Bremsen mit elektrischer Energie versorgt und der Energiespeicher damit entladen. Die elektrische Maschine verfügt üblicherweise über eine entsprechende Kühlung, beispielsweise eine Wasserkühlung, damit sie durch die im Betrieb erzeugte Wärme nicht thermisch belastet wird. Daher muss kein zusätzlicher elektrischer Widerstand in das Kraftfahrzeug eingebaut werden, mit dem die von der elektrischen Maschine erzeugte Energie in Wärme umgewandelt wird. Somit können Bauraum und zusätzliche Kosten eingespart werden. Des Weiteren kann die elektrische Maschine unabhängig von dem Ladezustand des Energiespeichers zum Bremsen des Kraftfahrzeugs verwendet werden.

In einer weiteren Ausführungsform erfolgt nach einem Überschreiten eines vorgegebenen, ersten Schwellwerts eines den Ladezustand des elektrischen Energiespeichers charakterisierenden Werts ein Übergang von dem ersten Betriebsmodus in den zweiten Betriebsmodus und/oder nach dem Unterschreiten eines vorgegebenen, zweiten Schwellwerts des den Ladezustand des elektrischen Energiespeicher charakterisierenden Werts ein Übergang von dem zweiten Betriebsmodus in den ersten Betriebsmodus, wobei der zweite Schwellwert kleiner ist als der erste Schwellwert. Somit kann unabhängig von dem Ladezustand des Energiespeichers immer eine Bremskraft mit der elektrischen Maschine bereitgestellt werden.

Die elektrische Maschine wird zum Erzeugen der Bremskraft in Abhängigkeit von dem Ladezustand des Energiespeichers entweder im ersten Betriebsmodus oder im zweiten Betriebsmodus betrieben. Der Zustandswechsel zwischen den beiden Betriebsmodi kann beispielsweise einem hystereseähnlichen Verlauf folgen. Ist der Energiespeicher bzw. die Batterie des Kraftfahrzeugs ausreichend bzw. vollständig aufgeladen, erfolgt ein Übergang von dem ersten Betriebsmodus zu dem zweiten Betriebsmodus. Ist im anderen Fall der Energiespeicher entsprechend entladen, so erfolgt ein Übergang vom zweiten Betriebsmodus in den ersten Betriebsmodus. Durch diese definierten Zustandswechsel wird ein unkontrolliertes bzw. schnelles Wechseln zwischen den beiden Betriebsmodi verhindert, die sich negativ auf das Bremsverhalten des Kraftfahrzeugs auswirken könnten.

Mit der zumindest einen elektrischen Maschine kann auch im Schubbetrieb oder beispielsweise bei einer Bergabfahrt des Kraftfahrzeugs ein Bremsmoment erzeugt werden. Hierbei kann die elektrische Maschine im ersten oder im zweiten Betriebsmodus betrieben werden.

In einer weiteren Ausführungsform wird zum Erzeugen des Bremsmoments eine Polung elektrischer Anschlüsse der zumindest einen elektrischen Maschine verändert. Bei der Verwendung einer Gleichstrommaschine kann die Polung der elektrischen Anschlüsse gewechselt werden, wodurch die Gleichstrommaschine mit einer im Vergleich zur Drehrichtung beim Antreiben gegenläufigen Drehrichtung betrieben wird. Ist die elektrische Maschine als Drehstrommaschine ausgebildet, so können beispielsweise zwei Phasen der elektrischen Versorgungsleitung vertauscht werden. Auf diese Weise kann durch die elektrische Maschine auf einfache Weise eine so genannte Gegenstrombremsung ermöglicht werden.

In einer weiteren Ausgestaltung wird bei Verwendung einer Drehstrommaschine als elektrischer Maschine zum Erzeugen des Bremsmoments eine Frequenz eines Drehfelds eines Stators der Drehfeldmaschine verändert. Wird beispielsweise als elektrische Maschine eine Asynchronmaschine verwendet, kann hierbei die Frequenz des Drehfelds des Stators derart eingestellt werden, dass sich der für die Gegenstrombremsung erforderliche Schlupf zwischen Stator und Rotor ergibt. Bei der Verwendung von Synchronmaschinen kann über die Einstellung der Frequenz des Drehfeldes der Winkelversatz zwischen dem Stator und dem Rotor der Synchronmaschine entsprechend angepasst werden.

Schließlich wird erfindungsgemäß bereitgestellt ein Kraftfahrzeug, welches dazu ausgebildet ist, das oben beschriebene Verfahren zum Bremsen eines Kraftfahrzeugs durchzuführen. Um die elektrische Maschine in dem zweiten Betriebsmodus zu betreiben, umfasst das Kraftfahrzeug eine entsprechende Einrichtung zum Wechseln der Polarität der elektrischen Anschlüsse der zumindest einen elektrischen Maschine. Die Einrichtung kann zu diesem Zweck entsprechende Leistungsbauelemente umfassen.

Die im Bezug auf das erfindungsgemäße Verfahren beschriebenen Weiterbildungen lassen sich entsprechend auf das erfindungsgemäße Kraftfahrzeug übertragen.

Die vorliegende Erfindung wird nun anhand der beigefügten Zeichnungen näher erläutert. Dabei zeigen:
- Fig. 1: eine schematische Darstellung eines Kraftfahrzeugs, das mit einer elektrischen Maschine angetrieben wird;
- Fig. 2: ein Diagramm, das die von der elektrischen Maschine erzeugte Bremskraft und die Bremskraft einer Reibbremse in Abhängigkeit von einem Pedalweg bzw. von einer auf das Bremspedal ausgeübten Pedalkraft zeigt; und
- Fig. 3: eine schematische Darstellung zur Erläuterung eines Zustandswechsels zwischen einem ersten und einem zweiten Betriebsmodus der elektrischen Maschine des Kraftfahrzeugs.

Die nachfolgend näher geschilderten Ausführungsbeispiele stellen bevorzugte Ausführungsformen der vorliegenden Erfindung dar.

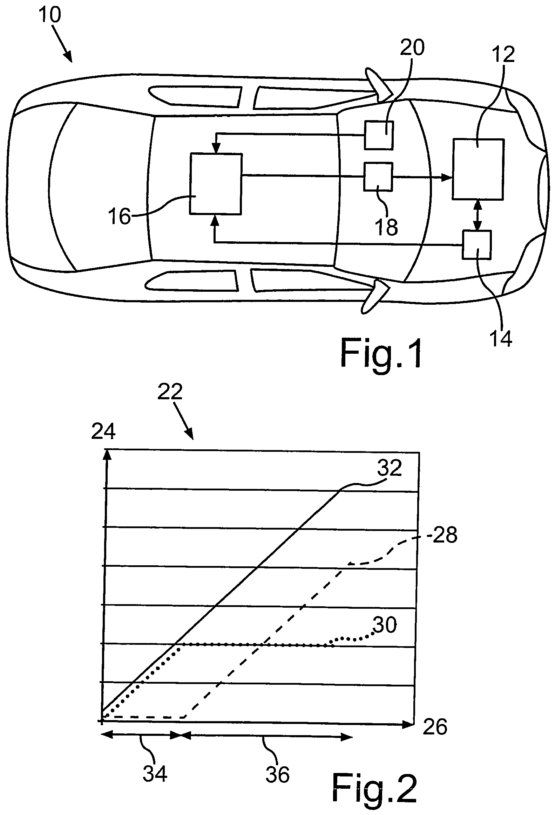

Fig. 1 zeigt eine schematische Darstellung eines Kraftfahrzeugs 10 in einer Draufsicht. Bei dem Kraftfahrzeug 10 handelt es sich bevorzugt um ein Elektrofahrzeug oder ein Hybridfahrzeug. Das Kraftfahrzeug 10 umfasst zumindest eine elektrische Maschine 12, mit der ein Antriebsmoment zum Antreiben des Kraftfahrzeugs 10 erzeugt werden kann. Ebenso kann das Kraftfahrzeug 10 mehrere elektrische Maschinen 12, beispielsweise eine elektrische Maschine 12 für jedes der Antriebsräder, umfassen. Überdies umfasst das Kraftfahrzeug 10 einen elektrischen Energiespeicher 14, der elektrisch mit der elektrischen Maschine 12 verbunden ist.

Die elektrische Maschine 12 kann nicht nur zum Antreiben des Kraftfahrzeugs 10 verwendet werden, sondern auch zum Bremsen des Kraftfahrzeugs 10. Zum Bremsen kann die elektrische Maschine 12 in einem ersten Betriebsmodus als Generator betrieben werden, in dem sie ein entsprechendes Generatorbremsmoment erzeugt. In diesem ersten Betriebsmodus, der auch als Nutzbremsen oder Rekuperation bezeichnet wird, wird von der elektrischen Maschine 12 elektrische Energie erzeugt, die dem elektrischen Energiespeicher 14 zugeführt werden kann.

Ebenso kann die elektrische Maschine 12 zum Bremsen des Kraftfahrzeugs 10 in einem zweiten Betriebsmodus betrieben werden. Hierbei wird die elektrische Maschine 12 derart mit elektrischer Energie aus dem Energiespeicher 14 versorgt, dass von der elektrischen Maschine 12 ein Bremsmoment erzeugt wird, welches dem Antriebsmoment entgegengesetzt gerichtet ist. Die elektrische Maschine 12 kann ferner eine entsprechende Kühlvorrichtung, beispielsweise eine Luft- oder Wasserkühlung aufweisen, um thermische Überlastungen der elektrischen Maschine 12 zu verhindern.

Bevorzugt wird der Betriebsmodus in Abhängigkeit von einem Ladezustand des elektrischen Energiespeichers 14 eingestellt. Zu diesem Zweck umfasst das Kraftfahrzeug 10 eine entsprechende Steuereinrichtung 16, mit der mittels eines entsprechenden Sensors der Ladezustand des elektrischen Energiespeichers 14 bestimmt werden kann. Erreicht der Ladezustand der Batterie einen oberen Schwellwert, kann die elektrische Maschine 12 nicht mehr als Generator betrieben werden, da die von ihr erzeugte elektrische Energie nicht mehr von dem elektrischen Energiespeicher 14 aufgenommen werden kann. In diesem Fall wird die elektrische Maschine 12 zum Bremsen des Kraftfahrzeugs 10 mit elektrischer Energie aus dem Energiespeicher 14 versorgt. Zu diesem Zweck ist die Steuereinrichtung 16 mit einer Einrichtung 18 des Kraftfahrzeugs 10 gekoppelt, mit der die Polungen der Anschlüsse der elektrischen Maschine 12 verändert werden können. Die Einrichtung 18 kann hierfür entsprechende Leistungsbauelemente, wie Transistoren, Thyristoren oder dergleichen, umfassen, mit denen ein Vertauschen der Polungen der elektrischen Maschine 12 bzw. der Phasen der elektrischen Maschine 12 ermöglicht wird. Auf diese Weise wird durch die elektrische Maschine 12 im sogenannten Gegenstrombetrieb ein Bremsmoment erzeugt, welches zu dem Antriebsmoment der elektrischen Maschine 12 entgegengesetzt gerichtet ist.

Genauso kann die Einheit 18 dazu ausgebildet sein, das Drehfeld einer elektrischen Drehmaschine entsprechend anzupassen. Bei der Verwendung einer Asynchronmaschine als elektrischer Maschine 12 kann durch die Einheit 18 die Frequenz des Drehfelds des Stators derart eingestellt werden, dass sich ein entsprechender Schlupf zwischen dem Stator und dem Rotor der Asynchronmaschine ergibt. Bei der Verwendung einer Synchronmaschine als elektrischer Maschine 12 kann über eine entsprechende Einstellung der Frequenz des Drehfelds des Stators der entsprechende Winkelversatz zwischen Stator und Rotor der Synchronmaschine realisiert werden.

Die Bremskraft, die von der elektrischen Maschine 12 bereitgestellt wird, kann in Abhängigkeit von der Stellung eines Bremspedals einer Reibbremseinrichtung eines Kraftfahrzeugs 10 eingestellt werden. Hierfür umfasst das Kraftfahrzeug 10 eine entsprechende Einheit 20, mit der die Position des Bremspedals bestimmt werden kann. Die Einheit 20 kann hierfür einen entsprechenden Positionssensor, Abstandssensor oder dergleichen umfassen.

Fig. 2 zeigt in einem Diagramm 22 die auf das Kraftfahrzeug 10 wirkende Bremskraft in Abhängigkeit von dem Pedalweg eines Bremspedals der Reibbremseinrichtung des Kraftfahrzeugs 10 bzw. der auf das Bremspedal von dem Fahrer ausgeübten Pedalkraft. Die Abszisse 26 kennzeichnet den Pedalweg bzw. die Pedalkraft und die Ordinate 24 die auf das Kraftfahrzeug 10 wirkende Bremskraft. Dabei zeigt die gepunktete Linie 30 den Verlauf der Bremskraft, welche von der elektrischen Maschine 12 in Abhängigkeit von dem Pedalweg bzw. der Pedalkraft bereitgestellt wird. Die gestrichelte Linie 28 zeigt die Bremskraft, die von der Reibbremseinrichtung des Kraftfahrzeugs 10 bereitgestellt wird. Die durchgezogene Linie 32 zeigt die Summe der Bremskräfte der elektrischen Maschine 12 und der Reibbremseinrichtung.

In einem ersten Bereich, der durch den Pfeil 34 gekennzeichnet ist, wird die Bremskraft ausschließlich von der elektrischen Maschine 12 bereitgestellt. Dieser erste Bereich entspricht dem Leerweg des Bremspedals der Reibbremseinrichtung. In diesem ersten Bereich wird von der elektrischen Maschine 12 eine Bremskraft bereitgestellt, welche im Wesentlichen in Abhängigkeit von dem Pedalweg bzw. von der Pedalkraft linear zunimmt. Dabei kann die Bremskraft der elektrischen Maschine 12 - je nach Ladezustand des elektrischen Energiespeichers 14 - in dem ersten Betriebsmodus oder dem zweiten Betriebsmodus bereitgestellt werden.

In einem zweiten Bereich, der durch den Pfeil 36 gekennzeichnet ist, wird die auf das Kraftfahrzeug 10 wirkende Bremskraft von der elektrischen Maschine 12 und der Reibbremseinrichtung des Kraftfahrzeugs 10 bereitgestellt. Dabei wird die elektrische Maschine 12 derart betrieben, dass von ihr im Wesentlichen eine über den Pedalweg konstante Bremskraft erzeugt wird. Von der Reibbremseinrichtung wird in diesem zweiten Bereich eine in Abhängigkeit von dem Pedalweg bzw. von der Pedalkraft im Wesentlichen linear ansteigende Bremskraft erzeugt. Somit ergibt für die Summe der beiden Bremskräfte, die durch die Linie 32 dargestellt ist, insgesamt über den kompletten Pedalweg bzw. über den kompletten Verlauf der Pedalkraft einen linearen Verlauf. Daher ergibt sich für den Fahrer kein ungewohntes Bremsverhalten des Kraftfahrzeugs 10.

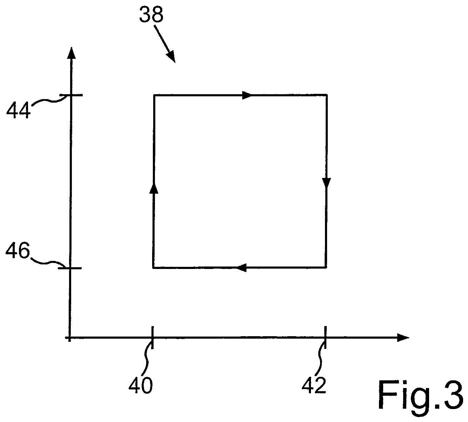

Fig. 3 zeigt in einem Diagramm 38 den Betriebsmodus der elektrischen Maschine 12 in Abhängigkeit von dem Ladezustand des elektrischen Energiespeichers 14. In dem Diagramm 38 zeigt die Abszisse den Betriebsmodus der elektrischen Maschine 12 und die Ordinate den Ladezustand des elektrischen Energiespeichers. Dabei ist in dem Diagramm 38 der erste Betriebsmodus durch die Linie 40 dargestellt. In dem ersten Betriebsmodus wird die elektrische Maschine 12 als Generator betrieben. Der zweite Betriebsmodus ist in dem Diagramm 38 durch die Linie 42 gekennzeichnet. In diesem Betriebsmodus wird von der elektrischen Maschine 12 ein dem Antriebsmoment entgegengesetztes Bremsmoment erzeugt. Sie wird also im Gegenstrombetrieb betrieben. Überschreitet der Ladezustand des Energiespeichers 14 einen vorgegebenen, ersten Schwellwert, der durch die Linie 44 dargestellt ist, erfolgt ein Übergang von dem ersten Betriebsmodus in den zweiten Betriebsmodus. In dem zweiten Betriebsmodus wird von der elektrischen Maschine 12 elektrische Energie aus dem elektrischen Energiespeicher 14 entnommen, wodurch der Energiespeicher 14 entladen wird. Unterschreitet der Ladezustand des Energiespeichers 14 einen vorgegebenen, zweiten Schwellwert, der durch die Linie 46 dargestellt ist, erfolgt wiederum ein Übergang von dem zweiten Betriebsmodus in den ersten Betriebsmodus. Auf diese Weise gibt sich der in dem Diagramm 38 dargestellte hystereseähnliche Verlauf. Somit ergibt sich ein kontrollierter Zustandswechsel, der negative Auswirkungen auf das Bremsverhalten des Kraftfahrzeugs 10 verhindert.

## Patentansprüche

1. Verfahren zum Bremsen eines Kraftfahrzeugs (10), das durch ein Antriebsmoment zumindest einer elektrischen Maschine (12) angetrieben wird, die mit einem elektrischen Energiespeicher (14) elektrisch verbunden ist, wobei in einem ersten Betriebsmodus die zumindest eine elektrische Maschine (12) als Generator zum Erzeugen eines Generatorbremsmoments betrieben wird, wobei in einem zweiten Betriebsmodus die zumindest eine elektrische Maschine (12) so mit elektrischer Energie aus dem Energiespeicher (14) versorgt wird, dass von der zumindest einen elektrischen Maschine (12) ein dem Antriebsmoment entgegengesetzt gerichtetes Bremsmoment erzeugt wird,
**dadurch gekennzeichnet, dass**
eine Bremskraft, die von der zumindest einen elektrischen Maschine (12) erzeugt wird, in Abhängigkeit von einer Stellung eines Bremspedals einer Reibbremseinrichtung des Kraftfahrzeugs (10) eingestellt wird, die Bremskraft in einem ersten Bereich eines Pedalwegs des Bremspedals ausschließlich von der zumindest einen elektrischen Maschine (12) je nach Ladezustand des elektrischen Energiespeichers (14) in dem ersten Betriebsmodus oder dem zweiten Betriebsmodus erzeugt wird und die Bremskraft in einem zweiten Bereich des Pedalwegs des Bremspedals von der zumindest einen elektrischen Maschine (12) und der Reibbremseinrichtung erzeugt wird, wobei die von der zumindest einen elektrischen Maschine (12) erzeugte Bremskraft in dem zweiten Bereich des Pedalwegs im Wesentlichen konstant ist und sich aus einer Summe der Bremskräfte der Reibbremseinrichtung und der zumindest einen elektrischen Maschine über den gesamten Pedalweg ein im Wesentlichen linearer Verlauf ergibt.

2. Verfahren nach Anspruch 1,
**dadurch gekennzeichnet, dass**
der Betriebsmodus in Abhängigkeit von einem Ladezustand des Energiespeicher (14) eingestellt wird.

3. Verfahren nach einem der vorhergehenden Ansprüche,
**dadurch gekennzeichnet, dass**
nach einem Überschreiten eines vorgegebenen, ersten Schwellwerts eines den Ladezustand des elektrischen Energiespeicher (14) charakterisierenden Werts ein Übergang von dem ersten Betriebsmodus in den zweiten Betriebsmodus erfolgt und/oder nach dem Unterschreiten eines vorgegebenen, zweiten Schwellwerts des den Ladezustand des elektrischen Energiespeicher (14) charakterisierenden Werts ein Übergang von dem zweiten Betriebsmodus in den ersten Betriebsmodus erfolgt, wobei der zweite Schwellwert kleiner ist als der erste Schwellwert.

4. Verfahren nach einem der vorhergehenden Ansprüche,
**dadurch gekennzeichnet, dass**
zum Erzeugen des Bremsmoments eine Polung elektrischer Anschlüsse der zumindest einen elektrischen Maschine (12) verändert wird.

5. Verfahren nach einem der vorhergehenden Ansprüche,
**dadurch gekennzeichnet, dass**
bei Verwendung einer Drehstrommaschine als elektrischer Maschine (12) zum Erzeugen des Bremsmoments eine Frequenz eines Drehfeldes eines Stators der Drehfeldmaschine verändert wird.

6. Kraftfahrzeug (10) mit
- zumindest einer elektrischen Maschine (12) zum Erzeugen eines Antriebsmoments für das Kraftfahrzeug (10),
- einem elektrischen Energiespeicher (14), der mit der elektrischen Maschine (12) elektrisch verbunden ist,
- einer Steuereinrichtung (16), mit der zum Bremsen des Kraftfahrzeugs (10) in einem ersten Betriebsmodus die zumindest eine elektrische Maschine (12) als Generator zum Erzeugen eines Generatorbremsmoments betreibbar ist, und
- einer Einrichtung (18) zum Verändern der Polung der zumindest einen elektrischen Maschine (12), wobei zum Bremsen des Kraftfahrzeugs (10) in einem zweiten Betriebsmodus die zumindest eine elektrische Maschine (12) so mit elektrischer Energie aus dem Energiespeicher (14) versorgbar ist, dass von der zumindest einen elektrischen Maschine (12) ein dem Antriebsmoment entgegengesetzt gerichtetes Bremsmoment erzeugbar ist
**gekennzeichnet durch**
- eine Einheit (20) zum Bestimmen einer Position eines Bremspedals einer Reibbremseinrichtung des Kraftfahrzeugs (10), wobei eine Bremskraft, die von der zumindest einen elektrischen Maschine (12) erzeugt wird, in Abhängigkeit von einer Stellung eines Bremspedals einer Reibbremseinrichtung des Kraftfahrzeugs (10) eingestellt wird, die Bremskraft in einem ersten Bereich eines Pedalwegs des Bremspedals ausschließlich von der zumindest einen elektrischen Maschine (12) je nach Ladezustand des elektrischen Energiespeichers (14) in dem ersten Betriebsmodus oder dem zweiten Betriebsmodus erzeugt wird und die Bremskraft in einem zweiten Bereich des Pedalwegs des Bremspedals von der zumindest einen elektrischen Maschine (12) und der Reibbremseinrichtung erzeugt wird, wobei die von der zumindest einen elektrischen Maschine (12) erzeugte Bremskraft in dem zweiten Bereich des Pedalwegs im Wesentlichen konstant ist und sich aus einer Summe der Bremskräfte der Reibbremseinrichtung und der zumindest einen elektrischen Maschine über den gesamten Pedalweg ein im Wesentlichen linearer Verlauf ergibt.

## Claims

1. Method to brake a motor vehicle (10) which is driven by a drive torque of at least one electrical machine (12) which is connected electrically to an electrical energy store (14), wherein, in a first operating mode, the at least one electrical machine (12) is operated as a generator to generate a generator braking torque, wherein, in a second operating mode, the at least one electrical machine (12) is supplied with electrical energy from the energy store (14) such that a braking torque in the opposite direction to the drive torque is generated by the at least one electrical machine (12), **characterised in that** a braking force which is generated by the at least one electrical machine (12) is adjusted depending on a position of a braking pedal of a friction braking device of the motor vehicle (10), the braking force is generated, in a first region of a pedal travel of the braking pedal, exclusively by the at least one electrical machine (12) depending on the state of charge of the electrical energy store (14) in the first operating mode or the second operating mode, and the braking force is generated, in a second region of the pedal travel of the braking pedal, by the at least one electrical machine (12) and the friction braking device, wherein the braking force generated by the at least one electrical machine (12) is substantially constant in the second region of the pedal travel and a substantially linear course results from a sum of the braking forces of the friction braking device and the at least one electrical machine over the entire pedal travel.

2. Method according to claim 1, **characterised in that** the operating mode is adjusted depending on a state of charge of the energy store (14).

3. Method according to any one of the preceding claims, **characterised in that** a transfer from the first operating mode into the second operating mode occurs after an exceeding of a predetermined first threshold value of a value characterising the state of charge of an electrical energy store (14) and/or a transfer from the second operating mode into the first operating mode occurs after a falling below of a predetermined second threshold value of the value characterising the state of charge of the electrical energy store (14), wherein the second threshold value is smaller than the first threshold value.

4. Method according to any one of the preceding claims, **characterised in that** a polarity of electrical connections of the at least one electrical machine (12) is changed to generate the braking torque.

5. Method according to any one of the preceding claims, **characterised in that**, in the case of use of a three-phase machine as an electrical machine (12) to generate the braking torque, a frequency of a rotary field of a stator of the induction machine is changed.

6. Motor vehicle (10) having
- at least one electrical machine (12) to generate a drive torque for the motor vehicle (10),
- an electrical energy store (14) which is connected electrically to the electrical machine (12),
- a control device (16) with which, to brake the motor vehicle (10) in a first operating mode, the at least one electrical machine (12) is able to be operated as a generator to generate a generator braking torque, and
- a device (18) to change the polarity of the at least one electrical machine (12), wherein, to brake the motor vehicle (10) in a second operating mode, the at least one electrical machine (12) is able to be supplied with electrical energy from the energy store (14) such that a braking torque in the opposite direction to the drive torque is able to be generated by the at least one electrical machine (12),
**characterised by**
- a unit (20) to determine a position of a braking pedal of a friction braking device of the motor vehicle (10), wherein a braking force which is generated by the at least one electrical machine (12) is adjusted depending on a position of a braking pedal of a friction braking device of the motor vehicle (10), the braking force is generated, in a first region of a pedal travel of the braking pedal, exclusively by the at least one electrical machine (12) depending on a state of charge of the electrical energy store (14) in the first operating mode or the second operating mode, and the braking force is generated, in a second region of the pedal travel of the braking pedal, by the at least one electrical machine (12) and the friction braking device, wherein the braking force generated by the at least one electrical machine (12) is substantially constant in the second region of the pedal travel and a substantially linear course results from a sum of the braking forces of the friction braking device and the at least one electrical machine over the entire pedal travel.

## Revendications

1. Procédé destiné au freinage d'un véhicule automobile (10), qui est entraîné par un couple moteur d'au moins une machine électrique (12) qui est reliée électriquement à un accumulateur d'énergie électrique (14),
dans lequel, dans un premier mode de fonctionnement, l'au moins une machine électrique (12) est exploitée comme générateur afin de produire un couple de freinage de générateur,
dans lequel, dans un deuxième mode de fonctionnement, l'au moins une machine électrique (12) est alimentée en énergie électrique à partir de l'accumulateur d'énergie (14) de telle sorte qu'un couple de freinage dirigé à l'opposé du couple moteur est produit par l'au moins une machine électrique (12),
**caractérisé en ce qu'**une force de freinage qui est produite par l'au moins une machine électrique (12) est réglée en fonction d'une position d'une pédale de frein d'un dispositif de freinage par frottement du véhicule automobile (10), **en ce que** la force de freinage dans une première plage d'une course de pédale de la pédale de frein est produite exclusivement par l'au moins une machine électrique (12) selon l'état de charge de l'accumulateur d'énergie électrique (14) dans le premier mode de fonctionnement ou dans le deuxième mode de fonctionnement et **en ce que** la force de freinage dans une deuxième plage de la course de pédale de la pédale de frein est produite par l'au moins une machine électrique (12) et par le dispositif de freinage par frottement, ladite force de freinage produite par l'au moins une machine électrique (12) étant globalement constante dans la deuxième plage de la course de pédale et une allure globalement linéaire sur toute la course de pédale résultant alors d'une somme des forces de freinage du dispositif de freinage par frottement et de l'au moins une machine électrique.

2. Procédé selon la revendication 1, **caractérisé en ce que** le mode de fonctionnement est réglé en fonction d'un état de charge de l'accumulateur d'énergie (14).

3. Procédé selon l'une des revendications précédentes, **caractérisé en ce que**, après qu'une valeur caractérisant l'état de charge de l'accumulateur d'énergie électrique (14) est devenue supérieure à une première valeur de seuil prédéterminée, une transition du premier mode de fonctionnement au deuxième mode de fonctionnement s'effectue et/ou, après que la valeur caractérisant l'état de charge de l'accumulateur d'énergie électrique (14) est devenue inférieure à une deuxième valeur de seuil prédéterminée, une transition du deuxième mode de fonctionnement au premier mode de fonctionnement s'effectue, la deuxième valeur de seuil étant inférieure à la première valeur de seuil.

4. Procédé selon l'une quelconque des revendications précédentes, **caractérisé en ce que**, pour produire le couple de freinage, une polarité de bornes électriques de l'au moins une machine électrique (12) est modifiée.

5. Procédé selon l'une quelconque des revendications précédentes, **caractérisé en ce que**, lors de l'utilisation d'une machine à courant triphasé comme machine électrique (12), une fréquence d'un champ magnétique rotatif d'un stator de la machine triphasée est modifiée pour produire le couple de freinage.

6. Véhicule automobile (10) avec
- au moins une machine électrique (12) afin de produire un couple moteur pour le véhicule automobile (10),
- un accumulateur d'énergie électrique (14) qui est relié électriquement à la machine électrique (12),
- un dispositif de commande (16) avec lequel, en vue de freiner le véhicule automobile (10), dans un premier mode de fonctionnement, l'au moins une machine électrique (12) peut être exploitée comme générateur afin de produire un couple de freinage de générateur, et
- un dispositif (18) destiné à modifier la polarité de l'au moins une machine électrique (12), sachant que, en vue de freiner le véhicule automobile (10), dans un deuxième mode de fonctionnement, l'au moins une machine électrique (12) peut être alimentée en énergie électrique à partir de l'accumulateur d'énergie (14) de telle sorte qu'un couple de freinage dirigé à l'opposé du couple moteur peut être produit par l'au moins une machine électrique (12),
**caractérisé par**
- une unité (20) destinée à déterminer une position d'une pédale de frein d'un dispositif de freinage par frottement du véhicule automobile (10), une force de freinage qui est produite par l'au moins une machine électrique (12) étant réglée en fonction d'une position d'une pédale de frein d'un dispositif de freinage par frottement du véhicule automobile (10), la force de freinage dans une première plage d'une course de pédale de la pédale de frein étant produite exclusivement par l'au moins une machine électrique (12) selon l'état de charge de l'accumulateur d'énergie électrique (14) dans le premier mode de fonctionnement ou dans le deuxième mode de fonctionnement et la force de freinage dans une deuxième plage de la course de pédale de la pédale de frein étant produite par l'au moins une machine électrique (12) et par le dispositif de freinage par frottement, ladite force de freinage produite par l'au moins une machine électrique (12) étant globalement constante dans la deuxième plage de la course de pédale et une allure globalement linéaire sur toute la course de pédale résultant alors d'une somme des forces de freinage du dispositif de freinage par frottement et de l'au moins une machine électrique.
